**Europäisches Patentamt**

**European Patent Office**

**Office européen des brevets**

(19)

(11) Numéro de publication : **0 209 414 B2**

(12) # NOUVEAU FASCICULE DE BREVET EUROPEEN

(45) Date de publication du nouveau fascicule du brevet : **18.11.93 Bulletin 93/46**

(51) Int. Cl.⁵ : **A23J 1/20, C07K 15/06**

(21) Numéro de dépôt : **86401243.0**

(22) Date de dépôt : **10.06.86**

(54) **Procédé de séparation sélective de l'alpha-lactalbumine des protéines du lactosérum.**

Le dossier contient des informations techniques présentées postérieurement au dépôt de la demande et ne figurant pas dans le présent fascicule.

(30) Priorité : **17.06.85 FR 8509153**

(43) Date de publication de la demande : **21.01.87 Bulletin 87/04**

(45) Mention de la délivrance du brevet : **30.08.89 Bulletin 89/35**

(45) Mention de la décision concernant l'opposition : **18.11.93 Bulletin 93/46**

(84) Etats contractants désignés : **BE CH DE FR GB IT LI LU NL**

(56) Documents cités : **DE-A- 2 155 696** **GB-A- 1 313 085**

(56) Documents cités : **CHEMICAL ABSTRACTS, vol. 85, no. 11, 13 septembre 1976, page 422, revendication no. 76484m, Columbus, Ohio, US; K.R. MARSHALL et al.: "The use of cation exchange in the production of traditional lactalbumin from cheddar cheese whey", & N.Z.J. DAIRY SCI. TECHNOL. 1976, 11(1), 69-70** **The Australian Journal of Dairy Technology p.144-149 (1983)**

(73) Titulaire : **LAITERIES EMILE BRIDEL** "**Les Placis**" **F-35230 Bourgbarre (Ille & Vilaine) (FR)**

(72) Inventeur : **Barbier, Jean-Pierre** **Le Pre Noe Noyal S/Seiche** **F-35230 St. Erblon (FR)** Inventeur : **Rialland, Jean-Paul** **2, rue Pierre Loti** **F-35240 Retiers (FR)**

(74) Mandataire : **Doan, Dinh-Nam et al** **Cabinet Beau de Loménie 158, rue de l'Université** **F-75340 Paris Cédex 07 (FR)**

EP 0 209 414 B2

## Description

La présente invention concerne un procédé de séparation séiective de l'alpha-lactalbumine des protéines du lactosérum.

Les protéines du lactosérum sont divisées en trois groupes principaux: les lactalbumines, les globulines et les peptones. Les lactalbumines comprennent la bêta-lactoglobuline, l'alpha-lactalbumine et la sérum-albumine, et représentent la fraction majeure des protéines du lactosérum. La bêta-lactoglobuline est une protéine caractéristique des ruminants. L'alpha-lactalbumine se trouve dans le lait de tous les mammifères et représente une protéine majeure du lait humain. Elle trouve une application importante dans la préparation des laits matemisés, et des préparations lactées non allergènes contenant de la caséine et de l'alpha-lactalbumine pour l'alimentation des nourrissons qui présentent une allergie à la bêta-lactoglobuline du lait de vache.

De nombreuses méthodes ont été proposées pour séparer ensemble toutes les protéines du lactosérum, par exemple par précipitation par la chaleur - une telle méthode est illustré dans l'article résumé dans les Chemical Abstracts, sous la référence 76484m (vol. 85 No 11 p 422) - ou encore par réaction avec des polyélectrolytes pour former des agrégats protéiques.

D'autres méthodes mettent en oeuvre d'autres agents précipitants tels que la carboxyméthylcellulose, l'acide polyacrylique, les polyphosphates ou encore le laurylsulfate de sodium...

Toutefois, ces procédés ne permettent pas de séparer individuellement les diverses protéines du lactosérum et les protéines ainsi récupérées ne présentent pas une bonne solubilité; de plus, il est très difficile d'éliminer l'agent de précipitation mis en oeuvre dans ces procédés.

La concentration des protéines du lactosérum réalisée couramment par ultrafiltration permet l'obtention de concentrés protéiques de bonne solubilité mais ne permet pas non plus de séparer les différents constituants protéiques du lactosérum entre eux. Une telle méthode de concentration des protéines du lactosérum est illustrée dans les brevets GB 1 313 085 et DE 2 155 696, où l'on décrit l'ultrafiltration de petit lait en dessous du pH isoélectrique.

La séparation des constituants protéiques peut être réalisée par chromatographie sur colonnes d'échangeurs d'ions en mettant en série une batterie de plusieurs colonnes d'échangeurs d'ions de fonctions différentes et en percolant successivement le produit à traiter sur lesdites colonnes; il est ainsi possible de séparer la bêta-lactoglobuline, les globulines, et l'alpha-lactalbumine.

Toutefois, cette technologie présente l'inconvénient d'être difficile à mettre en oeuvre et exige un lourd investissement, la capacité d'absorption des lacto-protéines sur les échangeurs d'ions étant faible: 100 mg de protéines/gramme d'échangeur.

Les inventeurs ont constaté qu'il est possible de séparer sélectivement par précipitation l'alpha-lactalbumine des diverses protéines du lactosérum par un traitement thermique du lactosérum préalablement amené dans des conditions précises de pH, de force ionique et de concentration.

La présente invention a donc pour objet un procédé simple et de faible coût d'exploitation pour la séparation sélective de l'alpha-lactalbumine des protéines du lactosérum, ledit procédé comportant un traitement thermique du lactosérum préalablement concentré à une teneur en matières sèches de 10 à 40 % en poids, et acidifié à un pH inférieur à 4, et de préférence égal à 3-3,5, ledit traitement thermique étant effectué à une température ne dépassant pas 75 °C, de préférence de 45 à 75 °C, et plus particulièrement de 50 à 55°C, pendant une durée de 15 secondes à 1 heure, de façon à précipiter sélectivement l'alpha-lactalbumine, ce traitement thermique étant suivi de la récupération de l'alpha-lactalbumine qui a précipité et éventuellement des autres lacto-protéines restant en solution dans le lactosérum résiduel.

Plus particulièrement, le procédé selon l'invention comporte essentiellement les étapes suivantes :

(1) concentration du lactosérum jusqu'à une teneur en matières sèches de 10 à 40 % en poids,

(2) acidification du lactosérum concentré à un pH inférieur à 4, de préférence égal à 3-3,5

(3) traitement thermique du lactosérum concentré et acidifié à une température ne dépassant pas 75°C, de préférence de 45 à 75°C, plus particulièrement de 50 à 55°C, pendant une durée de 15 secondes à 1 heure,

(4) récupération de l'alpha-lactalbumine sous forme de précipité et éventuellement des autres lacto-protéines restant en solution dans le lactosérum résiduel.

Selon une variante du procédé, on inverse les étapes de concentration et d'acidification du lactosérum, et le procédé selon l'invention comporte les étapes suivantes :

(1) acidification du lactosérum à un pH inférieur à 4, de préférence égal à 3-3,5

(2) concentration du lactosérum acidifié jusqu'à une teneur en matières sèches de 10 à 40 % en poids

(3) traitement thermique du lactosérum acidifié et concentré, à une température ne dépassant pas 75°C, de préférence de 45 à 75°C, plus particulièrement de 50 à 55°C, pendant une durée de 15 secondes à 1 heure,

(4) récupération de l'alpha-lactalbumine sous la forme d'un précipité et éventuellement des autres lacto-protéines restant en solution dans le lactosérum résiduel.

Le lactosérum que l'on peut utiliser dans le présent procédé peut être, par exemple un lactosérum de fromagerie obtenu après coagulation du lait par de la présure ou par acidification lactique, ou un lactosérum de caséinerie obtenu par fermentation lactique, acidification directe ou par échange d'ions du lait.

Les lactosérums préférés sont les lactosérums de caséine et plus particulièrement ceux obtenus après séparation de la caséine, tels que décrits dans le brevet français N° 80 08 644 2480568.

Composition moyenne des lactosérums

| | Lactosérum de caséine (par échange d'ions) | Lactosérum de caséine (à l'acide chlorhydrique) | Lactosérum de fromagerie |
|---|---|---|---|
| Matière sèche (g/l) | 60-65 | 60-65 | 62-65 |
| Matières azotée totale % ES (N X 6,38) | 10,5 | 10,5-11,5 | 12,5 |
| Matière azotée non protéique % ES (N) | 0,4 | 0,4-0,5 | 0,5-0,7 |
| Matières minérales % ES | 7,25 | 10,5-12 | 8 -8,5 |
| Matière grasse % ES | 0,5 | 0,5 | 1 |
| pH | 4,6 | 4,6 | 6,0-6,4 |
| Calcium % ES | 1,2 | 1,8-2 | 0,5-0,65 |
| Sodium % ES | 0,45 | 0,7-0,9 | 0,7-0,75 |
| Potassium % ES | 1,25 | 2,4-2,6 | 2,2-2,4 |
| Chlorures % ES (exprimé en NaCl) | 2,95 | 7 -7,5 | 2,8-3,0 |
| Phosphore % ES | 1,25 | 1 -1,3 | 0,55-0,7 |

ES = extrait sec.

La concentration du lactosérum peut être réalisée par les moyens traditionnels utilisés dans l'industrie laitière comme par exemple la concentration thermique sous vide, ou l'osmose inverse, ou l'ultrafiltration.

Il est préférable de procéder par osmose inverse car elle permet de limiter les chocs thermiques et d'éviter la dénaturation des protéines. Par osmose inverse, la concentration est techniquement possible jusqu'à une teneur de 25 % de matières sèches.

Il est possible techniquement de réaliser la concentration par ultrafiltration pour une réduction volumétrique de 5 à 10 volumes.

Pour une concentration inférieure à 10 % en matières sèches, on n'observe pas de précipitation notable de l'alpha-lactalbumine dans l'étape de traitement thermique.

Pour une concentration supérieure à 40 % de matières sèches, le lactosérum présente une viscosité élevée et la séparation des protéines précipitées devient délicate.

L'ajustement du pH du lactosérum peut être réalisé par des techniques classiques, par exemple par addition d'acide ou par échange de cations. L'échange de cations effectué sur une résine échangeuse d'ions sous forme H+ est préféré car il permet également d'obtenir une réduction de la teneur des ions minéraux. Les résines échangeuses d'ions appropriées et les techniques d'échange de cations sont celles mentionnées dans le brevet français 80 08 644/2480568 et dans la demande de brevet français 82 12 126/2529758.

Lorsqu'on emploie des résines échangeuses de cations faiblement acides, la totalité du lactosérum est traitée sur ces résines jusqu'à l'obtention du pH désiré.

Lorsqu'on emploie des résines échangeuses de cations fortement acides, on acidifie d'abord une partie du lactosérum jusqu'à un pH de 1,5 à 2 puis on le mélange au lactosérum restant pour amener le pH de l'ensemble à la valeur choisie.

A un pH supérieur ou égal à 4, on n'observe pas de précipitation sélective de l'alpha-lactalbumine dans le traitement thermique ultérieur.

La limite inférieure de l'intervalle de pH est de 1,5 mais il n'y a pas intérêt du point de vue économique à descendre au-dessous de pH 3.

Le traitement thermique est modéré et effectué à une température inférieure ou égale à 75 °C, de préférence de 45 à 75 °C, et mieux de 50 à 55 °C.

La durée du traitement est comprise entre 15 secondes et 1 minute pour les températures de 75 °C à 60 °C et de 1 minute à 1 heure pour les températures de 60 °C à 45 °C.

La limite supérieure de l'intervalle de température est fixée à 75 °C pour éviter la dénaturation des protéines du lactosérum.

La limite inférieure à 45 °C est choisie pour limiter la durée du traitement à une valeur raisonnable industriellement. A cette température, la précipitation sélective de l'alpha-lactalbumine demande déjà une durée minimale de 1 heure; au-dessous de 45 °C, il y a risque de développement bactérien.

L'intervalle de 50-55 °C permet d'éviter la dénaturation thermique des lactoprotéines tout en permettant une protection bactériostatique.

L'ordre des opérations acidification-concentration-traitement thermique se révèle favorable dans le cas où la concentration est réalisée par évaporation sous vide. Dans ce cas, lorsque la concentration est conduite avant l'acidification, il y a risque de précipitation des sels de calcium et encrassement du concentrateur; par contre, lorsque l'acidification est conduite avant la concentration, les sels de calcium sont totalement solubilisés et maintenus stables pendant l'opération de concentration.

La fraction protéique précipitée sélectivement, en l'occurrence l'alpha-lactalbumine, est séparée par les moyens connus habituels: centrifugation, filtration, etc. Les fractions protéiques non précipitées contenues dans le lactosérum résiduel peuvent être séparées en leurs constituants par chromatographie, ou bien le lactosérum résiduel contenant les fractions protéiques non précipitées peut être concentré par ultrafiltration pour préparer un concentré protéique pour des applications alimentaires particulières.

D'une manière générale, on procède de la manière suivante :

- le lactosérum contenant l'ensemble des lactoprotéines est débarrassé des fines de caillé et de la matière grasse libre résiduelle par centrifugation. Le lactosérum écrémé et clarifié est soumis à la concentration par osmose inverse à une température de 10 à 55 °C et de préférence à 50-52 °C jusqu'à une teneur en extrait sec de 15 à 25 %. Le lactosérum concentré est acidifié de préférence par échange d'ions utilisant les résines échangeuses de cations sous forme H+ et les techniques d'échange de cations décrites dans le brevet français N°80 08 644 et dans la demande N°82 12 126 à une valeur de pH comprise entre 3,0 et 3,5.
- le lactosérum concentré acidifié est traité thermiquement à une température de 50 à 55 °C pendant 30 minutes à 1 heure dans une cuve sous agitation modérée.
- le précipité protéique qui contient essentiellement l'alpha-lactalbumine est séparé par centrifugation puis lavé avec une quantité suffisante d'eau acidulée.
- l'alpha-lactalbumine mise en dispersion dans l'eau ou solubilisée après neutralisation est séchée par atomisation.

On décrit l'invention dans les exemples non limitatifs suivants.


Exemple 1


Séparation de l'alpha-lactalbumine du lactosérum de caséine

a) Concentration du lactosérum

100 l de lactosérum de caséine à pH 4,6 (Extrait sec 55 g/l) sont débarrassés des fines de caillé par séparation centrifuge puis soumis à la concentration par osmose inverse à 50 °C jusqu'à l'obtention d'une teneur en matière sèche de 20 % (27,5 kg de concentré).

b) Acidification par échange d'ions

Le concentré de lactosérum refroidi à 8 °C est percolé à travers d'une colonne de 2 litres de résines échangeuses de cations sous forme H$^+$ « Duolite C26 ». Le débit est d'environ 7,5 kg/heure et la durée du traitement est de 3 heures et demie. Le pH du lactosérum est abaissé de cette façon à 3,45.

c) Traitement thermique

Le lactosérum acidifié est réchauffé par l'intermédiaire d'un échangeur à plaques à 52 °C et maintenu à cette température dans une cuve thermostatée pendant 30 minutes.

d) Séparation de l'alpha-lactalbumine et séchage

Le mélange refroidi à 10 °C est soumis à une séparation centrifuge. Le protéine précipitée est séparée et lavée avec 10 l d'eau acidifiée et soumise à une nouvelle séparation centrifuge. Après mise en dispersion dans l'eau, le produit est séché par atomisation. On recueille de cette façon l'alpha-lactalbumine sous la forme d'une poudre, contenant 4,75 % d'humidité et 86,45 % en poids d'alpha-lactalbumine.

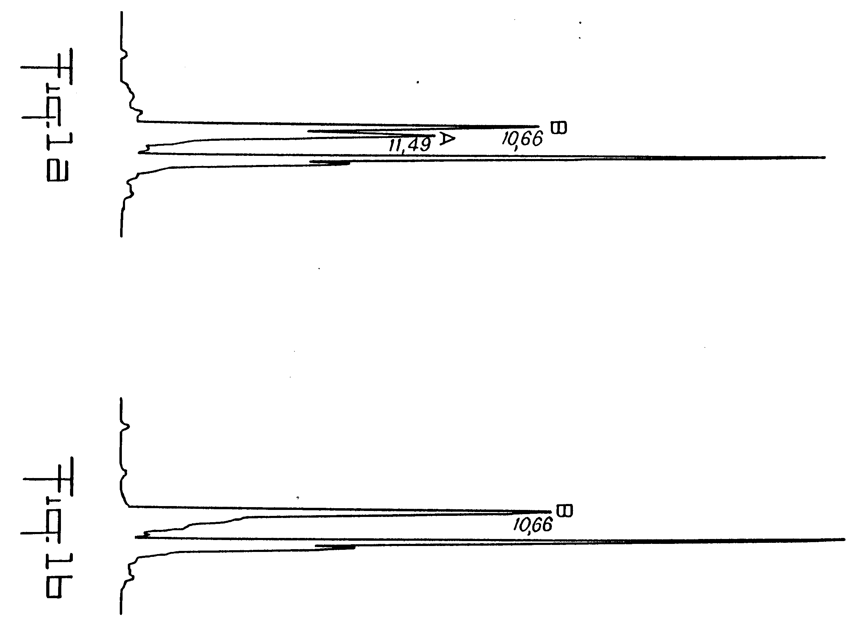

Le liquide surnageant est soumis à l'analyse par chromatographie liquide haute performance en comparaison avec le lactosérum de départ; les chromatogrammes obtenus sont représentés sur les figures 1a et 1b du dessin ci-joint pour le lactosérum de départ (Figure 1a) et pour le lactosérum résiduel après traitement thermique et séparation des protéines précipitées (Figure 1b). Le pic A correspondant à l'alpha-lactalbumine (temps de rétention de 11,49 min) qui figure nettement dans le chromatogramme du lactosérum de départ (Fig 1a) a disparu sur le chromatographe du lactosérum résiduel (Fig 1b). Par contre, le pic B correspondant à la bêta-lactoglobuline (temps de rétention de 10,66 min) figure sur les deux chromatogrammes.

Essai comparatif A (sans concentration préalable)

100 l de lactosérum de caséine écrémé sont acidifiés comme précédemment à une valeur de pH de 3,43. Après réchauffage à 52 °C, le lactosérum est maintenu à cette température pendant 30 minutes.

Aucune précipitation de protéines ne se produit; le maintien en température est prolongé pendant 30 minutes supplémentaires sans précipitation.

Essai comparatif B (sans acidification)

100 l de lactosérum de caséine écrémé sont soumis à la concentration par osmose inverse jusqu'à l'obtention d'un extrait sec de 20 % puis réchauffés à 52 °C et maintenus à cette température pendant 1 heure. On n'observe pas de précipitation de protéines.

Exemple 2

a) Acidification par échange d'ions

100 l de lactosérum de caséine à pH 4,6 (extrait sec 55 g/l) sont débarrassés des fines de caillé par séparation centrifuge, puis refroidis à 8°C et percolé au travers d'une colonne d'échangeurs de cations sous forme $H^+$ « CCR2 » de Dow Chemical jusqu'à abaissement du pH du lactosérum à 3,45.

b) Concentration du lactosérum

Le lactosérum acidifié est soumis à une concentration par osmose inverse à 50 °C jusqu'à l'obtention d'une teneur en matière sèche de 20 %.

c) Traitement thermique

Le lactosérum acidifié et concentré est traité comme dans l'exemple 1; il est réchauffé dans un échangeur à plaques à 52 °C et maintenu dans une cuve thermostatée pendant 30 minutes.

d) Séparation de l'alpha-lactalbumine et séchage

Le mélange refroidi à 10 °C est soumis à une séparation centrifuge. La protéine précipitée séparée et lavée avec 10 l d'eau acidifiée et soumise à une nouvelle séparation centrifuge. Après mise en dispersion dans l'eau, le produit est séché par atomisation. On recueille de cette façon l'alpha-lactalbumine sous la forme d'une poudre ayant la composition indiquée à l'exemple 1.

## Revendications

1. Procédé pour la séparation sélective de l'alpha-lactalbumine des protéines du lactosérum, caractérisé en ce qu'il comporte un traitement thermique du lactosérum préalablement concentré à une teneur en matières sèches de 10 à 40 % en poids et acidifié à un pH inférieur à 4 ; ledit traitement thermique étant effectué à une température de 45°C à 60°C pendant une durée de 1 minute à 1 heure ou à une température de 60°C à 75°C pendant une durée de 15 secondes à 1 minute, de façon à précipiter sélectivement l'alpha-lactalbumine ; ce traitement thermique étant suivi de la récupération de l'alpha-lactalbumine sous la forme d'un précipité et éventuellement de la récupération des autres lacto-protéines restant en solution dans le lactosérum résiduel.

2. Procédé selon la revendication 1, caractérisé en ce qu'il comporte essentiellement les étapes suivantes :
(1) concentration du lactosérum jusqu'à une teneur en matières sèches de 10 à 40 % en poids,
(2) acidification du lactosérum concentré à un pH inférieur à 4,
(3) traitement thermique du lactosérum concentré et acidifié à une température de 45°C à 60°C pendant une durée de 1 minute à 1 heure ou à une température de 60°C à 75°C pendant une durée de 15 secondes à 1 minute,
(4) récupération de l'alpha-lactalbumine sous la forme d'un précipité et éventuellement récupération des autres lacto-protéines restant en solution dans le lactosérum résiduel.

3. Procédé selon la revendication 1, caractérisé en ce qu'il comporte essentiellement les étapes suivantes :
(1) acidification du lactosérum à un pH inférieur à 4,
(2) concentration du lactosérum acidifié jusqu'à une teneur en matières sèches de 10 à 40 % en poids,
(3) traitement thermique du lactosérum concentré et acidifié à une température de 45°C à 60°C pendant une durée de 1 minute à 1 heure ou à une température de 60°C à 75°C pendant une durée de 15 secondes à 1 minute,

(4) récupération de l'alpha-lactalbumine sous la forme d'un précipité et éventuellement récupération des autres lacto-protéines restant en solution dans le lactosérum résiduel.

4. Procédé selon l'une quelconque des revendications 1 à 3, caractérisé en ce que la concentration est effectuée par osmose inverse à une teneur en matières sèches ne dépassant pas 25 % en poids.

5. Procédé selon l'une quelconque des revendications 1 à 4, caractérisé en ce que l'acidification du lactosérum se fait dans l'intervalle de pH de 3 à 3,5.

6. Procédé selon l'une quelconque des revendications 1 à 5, caractérisé en ce que l'acidification est effectuée par échange d'ions à l'aide d'une résine échangeuse de cations sous forme H⁺.

7. Procédé selon l'une quelconque des revendications 1 à 6, caractérisé en ce que le traitement thermique est effectué à une température de 50 à 55°C.

8. Procédé selon l'une quelconque des revendications 1 à 7, caractérisé en ce qu'il comporte un traitement thermique du lactosérum préalablement concentré par osmose inverse à une teneur en matières sèches de 20 % en poids et acidifié à un pH de 3,45 ; ledit traitement thermique étant effectué à une température de 52°C pendant 30 minutes.

9. Procédé selon l'une quelconque des revendications 1, 2, 4 à 8, caractérisé en ce qu'il comporte essentiellement les étapes suivantes:
   (1) concentration par osmose inverse du lactosérum jusqu'à une teneur en matières sèches de 15 à 25 %,
   (2) acidification du lactosérum concentré à un pH compris entre 3,0 et 3,5,
   (3) traitement thermique du lactosérum concentré et acidifié à une température de 50 à 55°C pendant 30 minutes à 1 heure.

10. Procédé selon l'une quelconque des revendications précédentes, caractérisé en ce que le lactosérum est préalablement écrémé et clarifié.

11. Procédé selon l'une quelconque des revendications précédentes, caractérisé en ce que l'alpha-lactalbumine précipitée est séparée par centrifugation, lavée et séchée par atomisation.

12. Procédé selon l'une quelconque des revendications précédentes, caractérisé en ce que le lactosérum est un lactosérum de fromagerie, ou un lactosérum de caséinerie.

## Patentansprüche

1. Verfahren zur selektiven Abtrennung von α-Lactalbumin aus Molkeproteinen, dadurch gekennzeichnet, daß es eine thermische Behandlung der vorher auf einen Gehalt an Trockenbestandteilen von 10 bis 40 Gew.-% konzentrierten und auf einen pH-Wert unter 4 angesäuerten Molke umfaßt; wobei diese thermische Behandlung bei einer Temperatur von 45 bis 60°C für eine Dauer von 1 Minute bis 1 Stunde oder bei einer Temperatur von 60 bis 75°C für eine Dauer von 15 Sekunden bis 1 Minute zur selektiven Ausfällung von α-Lactalbumin durchgeführt wird; wobei sich an diese thermische Behandlung eine Gewinnung von α-Lactalbumin in Form eines Niederschlags und gegebenenfalls Gewinnung der anderen Lactoproteine, die in der restlichen Molke in Lösung bleiben, anschließt.

2. Verfahren nach Anspruch 1, dadurch gekennzeichnet, daß es im wesentlichen folgende Stufen umfaßt:
   (1) Konzentrieren der Molke auf einen Gehalt an Trockenbestandteilen von 10 bis 40 Gew.-%,
   (2) Ansäuern der konzentrierten Molke auf einen pH-Wert unter 4,
   (3) thermische Behandlung der konzentrierten und angesäuerten Molke bei einer Temperatur von 45 bis 60°C für eine Dauer von 1 Minute bis 1 Stunde oder bei einer Temperatur von 60 bis 75°C für eine Dauer von 15 Sekunden bis 1 Minute,
   (4) Gewinnen des α-Lactalbumins in Form eines Niederschlags und gegebenenfalls Gewinnen der anderen Lactoproteine, die in der restlichen Molke in Lösung bleiben.

3. Verfahren nach Anspruch 1, dadurch gekennzeichnet, daß es im wesentlichen die folgenden Stufen umfaßt:

(1) Ansäuern von Molke auf einen pH-Wert unter 4,

(2) Konzentrieren der angesäuerten Molke auf einen Gehalt an Trockenbestandteilen von 10 bis 40 Gew.-%,

(3) thermische Behandlung der konzentrierten und angesäuerten Molke bei einer Temperatur von 45 bis 60°C für eine Dauer von 1 Minute bis 1 Stunde oder bei einer Temperatur von 60 bis 75°C für eine Dauer von 15 Sekunden bis 1 Minute.

(4) Gewinnen des α-Lactalbumins in Form eines Niederschlags und gegebenenfalls Gewinnen der anderen Lactoproteine, die in der restlichen Molke in Lösung bleiben.

4. Verfahren nach einem der Ansprüche 1 bis 3, dadurch gekennzeichnet, daß das Konzentrieren durch Umkehrosmose auf einen Gehalt an Trockenbestandteilen von nicht mehr als 25 Gew.-% durchgeführt wird.

5. Verfahren nach einem der Ansprüche 1 bis 4, dadurch gekennzeichnet, daß das Ansäuern der Molke in einem pH-Bereich von 3 bis 3,5 durchgeführt wird.

6. Verfahren nach einem der Ansprüche 1 bis 5, dadurch gekennzeichnet, daß das Ansäuern durch Ionenaustausch mit Hilfe eines Kationenaustauscherharzes in H+-Form durchgeführt wird.

7. Verfahren nach einem der Ansprüche 1 bis 6, dadurch gekennzeichnet, daß die thermische Behandlung bei einer Temperatur von 50 bis 55°C durchgeführt wird.

8. Verfahren nach einem der Ansprüche 1 bis 7 dadurch gekennzeichnet, daß es die thermische Behandlung von vorher durch Umkehrosmose auf einen Gehalt an Trockenbestandteilen von 20 Gew.-% konzentrierter und auf einen pH-Wert von 3,45 angesäuerter Molke umfaßt; wobei die thermische Behandlung bei einer Temperatur von 52°C für eine Dauer 30 Minuten durchgeführt wird.

9. Verfahren nach einem der Ansprüche 1, 2 und 4 - 8, dadurch gekennzeichnet, daß es im wesentlichen folgende Stufen umfaßt:

(1) Konzentrieren von Molke durch Umkehrosmose auf einen Gehalt an Trockenbestandteilen von 15 bis 25 %,

(2) Ansäuern der konzentrierten Molke auf einen pH-Wert von 3,0 bis 3,5,

(3) thermische Behandlung der konzentrierten und angesäuerten Molke bei einer Temperatur von 50 bis 55°C für 30 Minuten bis 1 Stunde.

10. Verfahren nach einem der vorstehenden Ansprüche, dadurch gekennzeichnet, daß die Molke vorher entfettet und geklärt worden ist.

11. Verfahren nach einem der vorstehenden Ansprüche, dadurch gekennzeichnet, daß das ausgefällte α-Lactalbumin durch Zentrifugation abgetrennt, gewaschen und durch Zerstäuben getrocknet wird.

12. Verfahren nach einem der vorstehenden Ansprüche, dadurch gekennzeichnet, daß es sich bei der Molke um Molke handelt, die bei der Käseherstellung oder bei der Caseinherstellung anfällt.

## Claims

1. Process for selectively separating the alpha-lactalbumin from the proteins of whey, characterized in that it comprises a heat treatment of the whey previously concentrated to a dry matter content of 10 to 40% by weight, and acidified to a pH less than 4 ; said heat treatment being carried out at a temperature of 45°C to 60°C for a duration of 1 minute to 1 hour or at a temperature of 60°C to 75°C for a duration of 15 seconds to 1 minute, so as to selectively precipitate the alpha-lactalbumin; said heat treatment being followed by the recovery of the alpha-lactalbumin in the form of a precipitate and possibly the recovery of the other lacto-proteins remaining in solution in the residual whey.

2. Process according to claim 1, characterized in that it essentially comprises the following steps:

(1) concentration of the whey up to a dry matter content of 10 to 40% by weight,

(2) acidification of the concentrated whey to a pH less than 4,

(3) heat treatment of the concentrated and acidified whey at a temperature of 45°C to 60°C for a duration of 1 minute to 1 hour or at a temperature of 60°C to 75°C for a duration of 15 seconds to 1 minute,
(4) recovery of the alpha-lactalbumin in the form of a precipitate and possibly the recovery of the other lacto-proteins remaining in solution in the residual whey.

3. Process according to claim 1, characterized in that it essentially comprises the following steps:
(1) acidification of the whey to a pH less than 4,
(2) concentration of the acidified whey up to a dry matter content of 10 to 40% by weight,
(3) heat treatment of the concentrated and acidified whey at a temperature of 45°C to 60°C for a duration of 1 minute to 1 hour or at a temperature of 60°C to 75°C for a duration of 15 seconds to 1 minute,
(4) recovery of the alpha-lactalbumin in the form of a precipitate and possibly the recovery of the other lacto-proteins remaining in solution in the residual whey.

4. Process according to any one of claims 1 to 3, characterized in that the concentration is effected by reverse osmosis to a dry matter content not exceeding 25% by weight.

5. Process according to any one of claims 1 to 4, characterized in that the acidification of the whey is carried out at a pH ranging from 3 to 3.5.

6. Process according to any one of claims 1 to 5, characterized in that the acidification is effected by ion exchange with a cation exchanger resin in $H^+$ form.

7. Process according to any one of claims 1 to 6, characterized in that the heat treatment is carried out at a temperature of 50°C to 55°C.

8. Process according to any one of claims 1 to 7, characterized in that it comprises a heat treatment of the whey previously concentrated by reverse osmosis to a dry matter content of 20% by weight, and acidified to a pH of 3.45; said heat treatment being carried out at a temperature of 52°C for 30 minutes.

9. Process according to any one of claims 1, 2, 4 to 8, characterized in that it essentially comprises the following steps:
(1) concentration by reverse osmosis of the whey up to a dry matter content of 15 to 25%,
(2) acidification of the concentrated whey to a pH comprised between 3.0 and 3.5,
(3) heat treatment of the concentrated and acidified whey at a temperature of 50°C to 55°C for 30 minutes to 1 hour.

10. Process according to any one of the preceding claims, characterized in that the whey is previously skimmed and clarified.

11. Process according to any one of the preceding claims, characterized in that the precipitated alpha-lactalbumin is separated by centrifugation, washed and dried by atomization.

12. Process according to any one of the preceding claims, characterized in that the whey is a whey from a cheese-making factory or a whey from a casein-factory.

Fig.1a

Fig.1b